# EUROPEAN PATENT APPLICATION

(11) **EP 1 729 213 A1**
(43) Date of publication of application: **06.12.2006**
(21) Application number: 05011616.9
(22) Date of filing: 30.05.2005
(51) Int. Cl.: G06F 9/44

(54) **Development of parallel/distributed applications**

(71) Applicant: Honda Research Institute Europe GmbH, 63073 Offenbach/Main (DE)
(72) Inventor: Goerick, Christian c/o Honda Research Institute, 63073 Offenbach/Main (DE); Ceravola, Antonello c/o Honda Research Institute, 63073 Offenbach/Main (DE); Joublin, Frank c/o Honda Research Institute, 63073 Offenbach/Main (DE); Dunn, Mark c/o Honda Research Institute, 63073 Offenbach/Main (DE)
(74) Representative: Rupp, Christian

(57) **Abstract**

A method for supporting the development of a parallel/distributed application,
where the development process comprises a design phase, an implementation phase and a test phase, and the method comprises the following steps:
providing, in the design phase, a script language for representing elements of a connectivity graph and the connectivity between them,
providing, in the implementation phase, predefined modules (10, 22) for implementing functionality of the application,
providing, in the implementation phase, predefined executors (Sequential-1 - Sequential-5, Parallel-1, Parallel-2) for defining a type of execution for the modules,
providing, in the implementation phase, predefined process-instances (Machine-1 - Machine-3) for distributing the application over several computing devices, and
providing, in the test phase, predefined abstraction levels for monitoring and testing the application in the test phase.

## Description

The present invention relates to field of developing a parallel/distributed application, where the development process can comprise a design phase, an implementation phase and a test phase. The invention finds application e.g. for setting up control systems of humanoid robots or other actors (e.g. an automatically guided vehicle) in which input signals of differing nature are to processed in a parallel fashion in order to control the behavior of the actor.

In general, parallel/distributed applications are composed of several functions running in parallel and interacting with each other in order to perform a defined task. The design of such complex systems requires effort especially concerning the handling of the integrity of the system behavior and the definition of the protocol for interaction between parallel tasks. Interactions between tasks must be synchronized in order to handle data integrity. Moreover, communication between machines has to be performed using network protocols and in a synchronized way in the network.

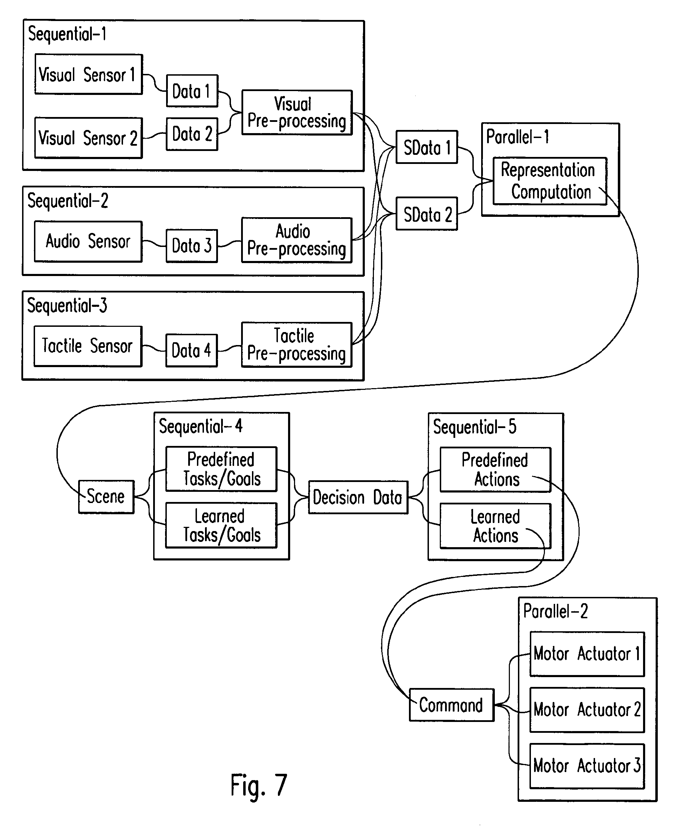

The development of parallel/distributed applications can be set up in several ways and supported by one or more of known tools. A known process followed in the development of such applications or systems is shown in figure 6.

The process may have cycles or may iterate during the development of the system. The development may continue during the life of the system. The main requirements in the phases are:
- in the *Design phase*:
   definition of the global functions of the system; subdivision of the system in parallel sub-tasks; definition of the critical conditions that may occur in subprocess interaction; analysis of dangerous conditions (e.g., deadlock);
- in the *Development phase*:
   handling of parallel processes; handling of parallel threads; handling of shared data; handling of semaphores, lock mechanisms and conditional variables;
- in the *Test*/*Monitoring phase*:
   definition of mechanisms that allow users to understand the system behavior in order to be able to solve problems or find and remove bugs in the system.

The following prior art references will be explained shortly in the following:
[1] David R. Butenhof. Programming with POSIX Threads, Addison Wesley Publishing, 2000.
[2] Douglas C. Schmid and Stephen D. Houston. C++ Network Programming, volume Vol.1: Master Complexity with ACE and Patterns. Addison Wesley Publishing, 2002.
[3] Al Geist, Adam Beguelin, Jack Dongarra, Weicheng Jiang, Robert Manchek, Vaidy Sunderam. PVM: Parallel Virtual Machine, A Users' Guide and Tutorial for Networked Parallel Computing. MIT Press, Cambridge, Massachusetts, USA,1994.
[4] Marc Snir, Steve Otto, Steven Huss-Lederman, David Walker and Jack Dongarra. MPI: The complete reference, MIT Press, Cambridge, Massachusetts, USA, http://www.netlib.org/utk/papers/mpi-book.html, 1996.
[5] http://www.ilogix.com.
[6] Wendy Boggs, Michael Boggs. Mastering UML with Rational Rose 2.0, Sybex Books, 2002.
[7] Real-Time Innovation. ControlShell User's Manual, Version 7.0, Real-Time Innovation Inc., California, 2001.

Part of the development/debugging time can be saved depending on the type of libraries used. Libraries like PTHREAD [1] can be used for the handling of threads and the most general lock mechanisms for synchronization. The usage of such a library requires a deep knowledge on parallel programming. Still, though, applications developed with this library are prone to errors. Other libraries, like ACE [2], PVM [3] and MPI [4], intend to solve the problems related to parallel execution and data exchange in parallel/distributed computing in a more fundamental way. These libraries cover most of the issues of parallel programming, even if they still leave a certain amount of work to the user. Moreover, the usage of such libraries does not enforce any kind of modularization or clear design, leaving these aspects to the goodwill of the user.

Another way of supporting the development of parallel/distributed applications is achieved by tools like Rhapsody [5] or Rational Rose [6]. These tools employ a modular approach and a more comprehensive design by the usage of UML ("Unified Modeling Language"). However, these tools leave to the user the definition and implementation of many important aspects, for example communication, parallel processing and synchronization. Their target is to include a programming language in an integrated development environment that can cover the design, coding and test phases, but still leaves a big degree of freedom to the user.

A further tool that covers the design phase and the development phase with a modular approach (partitioning of data and computation) is ControlShell [7]. With this tool it is possible to design and develop applications at the same time by the composition of several types of modules. This tool is able to handle parallel/distributed applications, but since it has been designed specifically for control systems, the handling of the modules is always under the control of sample-rate units that control the module's execution directly (synchronous mode) or indirectly through a state machine (asynchronous mode). Moreover, handling of data synchronization between threads is left to the user.

### Objects of the invention

In view of the prior art as described above, it is an object of the invention to provide for an improved support for the design, creation and the test of parallel/distributed applications.

It is another object of the invention to support the design, creation and the test of data-driven parallel/distributed applications.

It is a further object of the invention to simplify the development process for parallel/distributed applications.

It is still another object of the invention to enable in an efficient way the development of parallel/distributed applications which are robust and reliable.

### Brief description of the claims

The above objects are achieved by means of the features of the appended independent claims. Advantageous features are defined in the dependent claims.

According to a first aspect of the invention, a method for supporting the development of a parallel/distributed application is proposed, where the development process comprises a design phase, an implementation phase and a test phase, and the method comprises the following steps:
providing, in the design phase, a script language for representing elements of a connectivity graph and the connectivity between them,
providing, in the implementation phase, predefined modules for implementing functionality of the application,
providing, in the implementation phase, predefined executors for defining a type of execution for the modules,
providing, in the implementation phase, predefined process-instances for distributing the application over several computing devices, and
providing, in the test phase, predefined abstraction levels for monitoring and testing the application in the test phase.

The method may further comprise the step of processing, in the implementation phase, the connectivity graph as represented based on the script language to define and configure particular modules based on the predefined modules and to define the connectivity of the particular modules.

The predefined modules may comprise computing modules for implementing functional blocks as part of the computation of the parallel/distributed application. The computing modules may each have an interface comprising input data, output data, input events, output events and initialization parameters. Passive computing modules can be provided, which perform computations only in case new input data is available.

The predefined modules may further comprise data modules representing data which is used by the computing modules and/or is exchanged between the computing modules. The data modules may represent shared data and each data module may contain data of a specific data type. The data modules each can have an interface comprising an input gate, output fields and initialization parameters. According to particular embodiments of the inventive method, data requiring synchronization is identified and an appropriate synchronization mechanism is applied for each data module. Resource synchronization is an operation required to let parallel systems share common resources. Each data module may instantiate a list of buffers providing write or read memory for the connected computing module/s.

The predefined modules may also comprise link modules representing the connectivity pattern connecting computing and / or data modules. Each link module may implement a specific communication protocol. Each link module may relate to one link type out of the group of link types comprising local memory pointer link, for linking modules belonging to a common process, and network link, for linking modules via a network.

In some embodiments of the inventive method, each computing module may be assigned to one executor. Generally, each executor may group a set of computing modules in one or more threads. Alternatively or additionally, each executor may represent a pattern of execution for the assigned modules. Each executor may then relate to one type of execution pattern out of the group of patterns comprising parallel execution, where each module has its own thread, sequential execution, where all modules are executed sequentially in the same thread, and one step execution, where only one step of execution of all modules is performed. The group of execution patterns may further comprise chain execution, where all computing modules of a thread are executed sequentially depending on the availability of data for the first module in the chain, and step-by-step execution, where one computing module at a time is executed.

In some embodiments of the inventive method, each process-instance may comprise an assignment of modules to a process. Generally, each computing module may be assigned to one process-instance. In some embodiments of the inventive method, a further step may comprise grouping, in the implementation phase, a set of executors into a single process as one process-instance.

Each of the predefined modules may comprise a monitoring code for monitoring the functionality implemented by the module, for example in a test phase. The predefined abstraction levels may comprise a functionality level, where at least one module generates monitoring data related to a functionality of the module. The predefined abstraction levels may additionally or alternatively comprise a module level, where the input and output of at least one module is monitored in order to analyze the data flow related to that module. The predefined abstraction levels may additionally or alternatively comprise a system level for monitoring the entire application.

In particular embodiments of the inventive method, the script language is used during execution to execute the application.

According to another aspect of the invention, a method for supporting the development of a parallel/distributed application is proposed, where the development process comprises a design phase, an implementation phase and a test phase, and the method comprises the following steps:
providing, in the design phase, a script language for representing elements of a connectivity graph and the connectivity between them,
providing, in the implementation phase, computing modules, data modules and link modules for implementing the functionality of the application, where the modules and their connectivity are automatically generated from the connectivity graph as represented based on the script language, and
providing, in the test phase, predefined abstraction levels for monitoring and testing the application in the test phase.

### Overall aspects and advantages of the invention

The method according to the invention introduces a new layer between operating system and user application.

This new layer results from the inventive approach towards the development of parallel/distributed systems. With the known standard approach, the development of parallel/distributed systems requires the designer/developer to handle many complex functionalities manually, while with the proposed method many of these are automatically handled by the new layer.

Within the known approach, the granularity, at which the user has to handle parallel/distributed systems, is at the application level, while with the proposed method the granularity is at module level (i.e. at the level of a functionality, a data structure or a data communication method). This simplifies to every phase in the development of a parallel/distributed system, since much more attention can be spent to the elements of the system (the modules) and less attention needs to be spent to the integration issues. This is so, since these are automatically handled by the proposed method. With the standard approach, the user has to define or use a design process that may need to be kept synchronized with the development phases while with the proposed method the design is part of the implementation of the system. Therefore the method according to the invention is based on a new approach regarding design and development of large-scale parallel systems.

The invention aims at supporting and simplifying the design, creation and test of parallel/distributed data-driven applications, achieved amongst others by the provision of predefined modules, namely Computing Modules, Data Modules and Link Modules with well defined properties.

Computing Modules are objects that may perform a general or a specific functionality. Each Computing Module is associated to an Executor that defines the type of execution (parallel, sequential, once ...). Data Modules represent memory space used to pass information from a source Computing Module to a destination Computing Module. Link Modules are objects that define the connectivity between Computing Modules and Data Modules. Each Link Module is associated to a specific communication protocol that determines the channel that needs to be used in the communication. According to the invention, synchronization between modules and machine-to-machine communication is handled automatically for distributed applications developed with the inventive method. The invention thus covers the fields of development of parallel systems, robot applications and real-time systems. Real-time systems are systems that must satisfy explicit (bounded) response-time constraints to avoid severe failure situations. Examples for real-time systems are a watch, washing-machines or robots.

The inventive method proposes, amongst others, to achieve a tight coupling of the design with the implementation of a parallel/distributed system. According to the invention, the design of a system is defined by a connectivity graph describing the system in all its parts. A script language is then used that allows the one-to-one mapping of the elements of the connectivity graph. Thus with the script language, the application can be described. The script language is a kind of high-level language that describes the modules and the connectivity between them. A graphical tool that creates and visualizes the design of parallel/distributed systems may use this language for an internal representation of the design. At the same time this language can be used by a running system in order to execute it. In order to be able to achieve both goals, the language has to be simple and flexible.

A system may be designed by representing it with a (possibly large) number of functional blocks interconnected in a complex fashion by arrows. This type of representation is highly modular and allows quick insights into structure and properties of the application. Employing this abstraction level allows in an efficient way the creation of modular systems. In the inventive method, functional blocks may be mapped to Computing Modules. The connections between them are represented by Link Modules. The data that flows through the connections (i.e. the communication between the functionalities) is represented by Data Modules, that identify the type of data that flows through the arrows of a graph.

Parallel/distributed systems typically rely on heavy resource usage in terms of CPU-power, memory space and network communication capabilities. The best use of CPU-power is generally achieved by employing operating system processes and threads. The usage of such processes and threads is, in principle, the same for every parallel application.

The method according to the invention develops this aspect further and proposes to handle parallelism by introducing the concepts of Executors and Process-Instances, which handle the assignment of functionalities to threads and processes.

One idea in this respect is that each Computing Module may belong to one Executor and one Process-Instance. Executors hide the handling of threads while Process-Instances hide the handling of operating system processes.

There may be several types of Executors. Examples may be Parallel Executors, where each module has its own thread, Sequential Executors, where all modules are executed sequentially in the same thread, or Once Executors, where only one step of the execution of all modules is performed.

According to this aspect of the invention, each computing module has internally defined one cycle of its computation that makes Executors able to control threads.

Process-Instances define groups, thus determining which modules belong to which processes. Via this partitioning it is possible to create several processes out of one single graph and thus, implicitly, if communication between modules is confined to the same process or belongs to two or more different processes. This allows the system to choose the appropriate communication protocol depending on inter-process or intra-process communication.

As parallel/distributed systems make intensive use of CPU time, it is a typical situation during execution of such a system that a task is waiting for data. In other words, it is a frequently occurring situation that parallel tasks can compute only if some data is available. The inventive method suggests using the "data-driven" paradigm to generally handle this type of behavior. Data driven systems usually condition the execution of modules with the availability of the data that the modules require. The method described here allows to easily implement the data-driven paradigm by inserting a standard pattern in the Computing Modules. This pattern creates barriers to the computation in dependency of the availability of the module's input data. This on the same time assures an optimized utilization of available CPU resources.

Parallel/distributed applications require mechanisms to preserve shared data integrity. According to the inventive method this is advantageously achieved with the concept of Data Modules. Data Modules hold shared data, which are to be exchanged between two or more connected modules. With the concept of Data Modules it is possible to easily identify data that requires synchronization and then to apply the appropriate synchronization mechanism. Synchronization in itself is a well-known problem and there are a number of common patterns available that may be used, therefore these will not be described here. The inventive method proposes to apply a suitable synchronization mechanism in the Data Modules depending on the connected Computing Modules and on the parallelism level defined by the user through Executors and Process-Instances.

The concepts of Computing Modules, Data Modules and Link Modules, besides enforcing modularization, allows to easily implement monitoring capabilities into a parallel/distributed system. This is achieved by the definition of a standard module format providing for the insertion of monitoring code into the modules. Such code can generate information related to the behavior of the module itself. Analysis tools may process this information in order to gain views of the running system which enable the user to test, debug and monitor a running system in an efficient way.

The method according to the invention allows to combine one or more of the discussed aspects in a single tool. In this respect, the method provides for a comprehensive and common philosophy for design, code development and execution modality of parallel/distributed systems.

### Detailed description

Further aspects and advantages of the invention will become apparent from the subsequent description of embodiments of the invention with respect to the appended drawings, which show:
- Fig. 1: a schematic view of an embodiment of a Computing Module;
- Fig. 2: a schematic view of an embodiment of a Data Module;
- Fig. 3: in the form of a functional block diagram, an illustration of the interworking of computing modules, a data module and link modules;
- Fig. 4a, 4b: in the form of a functional block diagram, an illustration of the principles of operation of data modules and computing modules for data access;
- Fig. 5: in the form of a functional block diagram, an illustration of a robot control system according to an embodiment of the invention;
- Fig. 6: the interface of one of the modules of the embodiment depicted in Fig. 5;
- Fig. 7: a schematic illustration of an execution pattern for the system of Fig. 5;
- Fig. 8: a schematic illustration of a partition of the system of Figs. 5, 7 onto machines, and

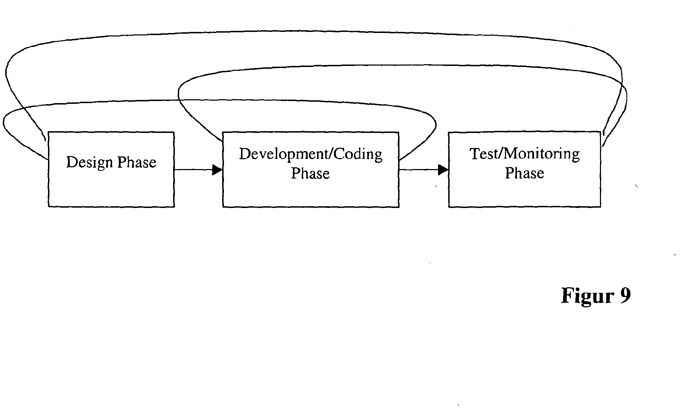

- Fig. 9: a known design process.

In the figures, the same reference numerals are used for the same or similar elements.

Before describing the development of a complete application, particular aspects of development supporting tools according to embodiments of the invention are discussed.

### Script Language

As is known, parallel/distributed systems may be developed with the aid of a low level language in a form (source code) that hides the general structure of the system for a non-developer. The general structure is usually stored in a number of design documents, diagrams or graphs that need to be maintained and updated during the development process. Properly aligning the design documents with the momentary development stage of the system is commonly a difficult task.

The invention proposes to design the application directly in a script form that could be used to define the design in a document format and at the same time could be used by the system for configuration purposes, to configure the modules, establish the connectivity of the application and finally execute it.

### Computing Modules

Parallel/distributed systems are composed of several functions. These functions are usually assembled in a way that does not necessarily follow a modular design. The definition of Computing Modules according to the invention leads to a modular design enforcing a clear distinction between the building blocks that perform the computations in a parallel/distributed system.

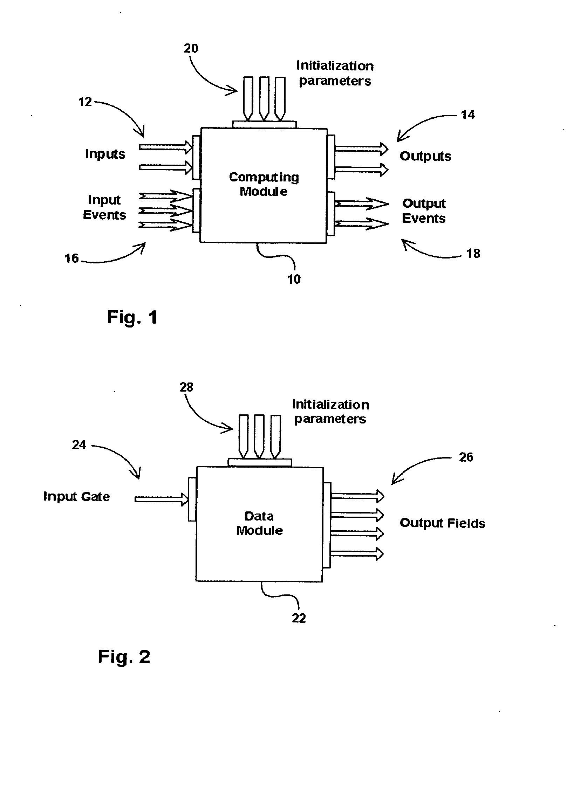

Fig. 1 is a principal illustration of a Computing Module 10, which implements a particular function or functions of a parallel/distributed system. The Module 10 also provides a well-defined interface. This interface comprises Inputs 12, Outputs 14, Input Events 16, Output Events 18 and Initialization parameters 20.

The Inputs 12 identify input data for the Module 10 defined with a specific type (read only). The Outputs 14 identify output data that the Module 10 writes with a defined type (write only). The Input Events 16 identify signals that the Module receives when certain events occur outside the Module 10. The Output Events 18 identify signals that the Module sends when certain events occur inside the Module 10. The Initialization parameters 20 identify initial values for the instantiation of the Module 10.

Inputs 12 and Outputs 14 of the Computing Module 10 must be connected to the appropriate type of Data Modules through a Link Module, as described further below. The Input Events 16 of the Module 10 must be connected to Output Events of Computing Modules through a Link Module. The Initialization parameters 20 represent the initial attributes of a specific Module instance, here the Module 10. Through these parameters it is possible to instantiate the Computing Module 10 with different starting conditions.

Computing Modules can in general be active or passive: active modules perform their computation unconditionally; passive module can perform their computation only if some new input data is available (newer with respect to the last computation time). This property allows the definition of a data-driven system (in contrast to a clock-driven system) and beside that uses more efficiently the available CPU resources.

### Data Modules

In parallel/distributed systems it is possible to identify data that is used to communicate results produced by one function to another. This data is usually globally defined in the system or locally in a function. The definition of Data Modules according to the invention leads to a modular design enforcing a clear definition of the communication interface that the functions need in the system.

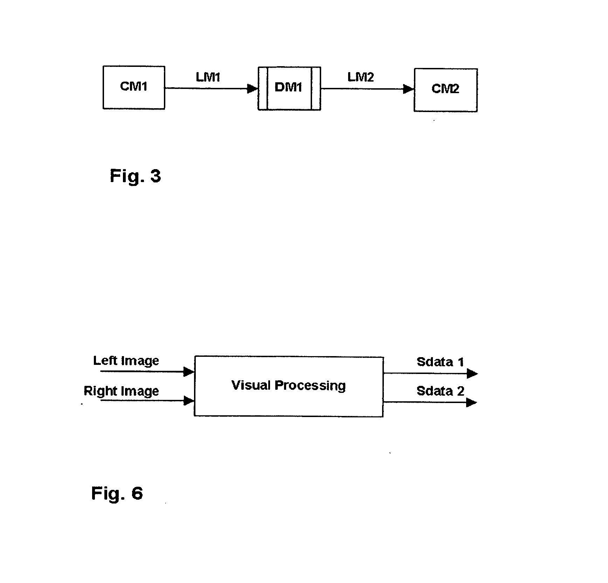

Fig. 2 illustrates an embodiment of an inventive Data Module 22, which specifies a data type in a well-defined interface. This interface comprises Input Gate 24, Output Fields 26 and Initialization parameters 28.

The Input Gate 24 identifies the entry point of the data that a Computing Module (not shown) uses to write new values (write). The Output Fields 26 identify the connection point/s where Computing Modules read the full data or part of it (read). The Initialization parameters 28 identify initial values for the instantiation of the Data Module 22.

The Input Gate 24 of the Data Module 22 must be connected to the Output of a Computing Module with the same data type (through a Link Module, as described further below). The Output Fields 26 must be connected to Inputs of Computing Modules with the same data types (through a Link Module). The Initialization parameters 28 represent the initial attributes of a specific Data Module instance, here Data Module 22. Through these parameters it is possible to instantiate the Data Module 22 with different starting conditions.

### Link Modules

In the design phase, a system may be represented as a number of blocks interconnected by arrows. This type of representation is highly modular and enables insights into the system at first glance. The definition of Link Modules according to the invention encapsulates the concept of the arrows. This allows the system to define different types of communication channels, depending on the design requirements.

Fig. 3 illustrates an example of the cooperation of computing modules CM1, CM2, a data module DM1 and link modules LM1, LM2 according to an embodiment of the invention. The two Computing Modules CM1, CM2 are connected to the Data Module DM1 via the Link Modules LM1 and LM2.

The following two cases can be distinguished:
1) All modules belong to the same process. The communication of data from CM1 to DM1 and from DM1 to CM2 is performed by copying the output data from CM1 to DM1 and giving a pointer of this data to CM2. In other words, CM1, CM2 and DM1 share the same memory space. The Link Modules LM1 and LM2 are of a "local memory pointer link type".
2) CM1 belongs to a machine M1 (not shown in Fig. 3) and CM2 belong to a machine M2. In this case the communication from CM1 to CM2 via DM1 is performed using, e.g., a network. The Link Modules LM1 and LM2 are of a "network link type".

In general, several types of Link Modules may be present in a system, each of them using different channels for the data transport.

### Executor/Process-Instance

Parallel/distributed systems have to be designed and/or implemented to make efficient use of parallel computation facilities. Within a machine, parallel processes or parallel threads are employed in order to make full use of the available hardware. The usage of processes and threads via Executors and Process-Instances according to the invention is described next.

An Executor groups a set of Computing Modules in one or more thread, executing them with a specific policy defined by the Executor. Examples of Executors are:
Parallel: Assign one thread to each Computing Module;
Sequential: Execute all Computing Modules in the same thread in a sequence;
Chain: Execute all Computing Modules in the same thread in a sequence, but the execution is conditioned to the availability of data for the first module;
Once: Execute one step of the computation of the Computing Modules;
StepByStep: Through an interactive section, allows the user to execute one Computing Module at a time.

A Process-Instance groups a set of Executors into a single process. In this way it is easily possible to distribute an application over several machines.

The abstraction concept of Executors and Process-Instances removes from the developers the need to manually code the usage of threads and processes. Moreover, in this way designers can determine and change at any time the parallelism level of a system without the need to develop it in the implementation code.

### Data Buffering

The aspect of Data Buffering is related to the handling of synchronization of data between threads and machines. In the development and debugging phase of parallel/distributed systems, typically much effort is to be spent for handling synchronization and serialization of shared resources. Standard functions exist that support the handling of these aspects. However, the usage of such functionalities is difficult and tedious. Many bugs in parallel/distributed systems are due to a non-appropriate usage of these tools. The method according to the invention proposes a solution to this problem by the usage of double buffering techniques for handling the inventive Data Modules. Each Data Module instantiates a list of buffers. The list is used by the Computing Modules for writing and reading in a mutual exclusive way.

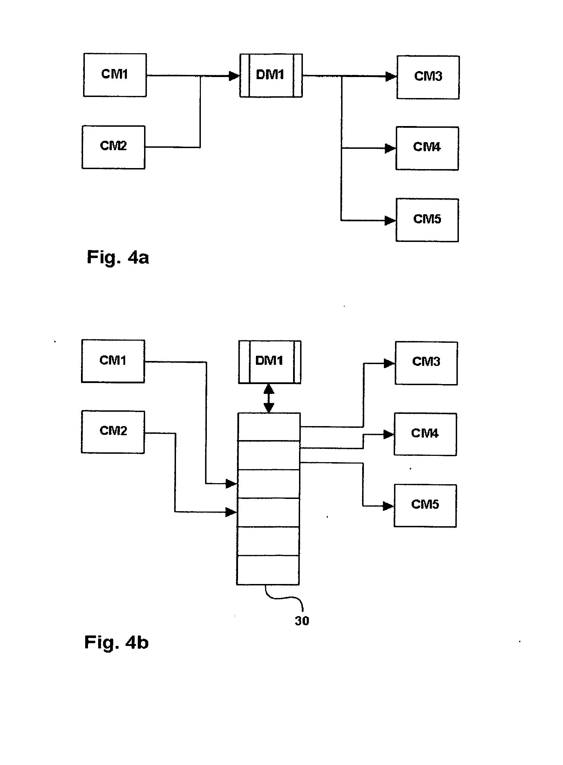

Figs. 4a, 4b illustrate an example in the form of functional block diagrams. Fig. 4a shows an application where two Computing Modules CM1, CM2 are connected with the Data Module DM1 for the purpose of writing output data. Three Computing Modules CM3, CM4, CM5 are connected with the Data Module DM1 for the purpose of reading input data.

The double buffering technique as used in the example application of Fig. 4a is illustrated in detail in Fig. 4b. The Data Module DM1 is associated to a buffer list 30. The buffer list 30 contains the effective data. Each writer module (CM1 and CM2) owns a buffer for the next value to be published. Every time a writer module publishes a new value, it publishes the buffer and then takes a new buffer for the next value. Each reading module (CM3, CM4, CM5) can read a published value from the buffer list.

With this approach it is possible to de-couple communication between modules such that synchronization is handled automatically. This allows a non-blocking communication: Computing Modules never need to stop computation for communication issues. Moreover, the risk of deadlocks is eliminated.

### Monitoring

Monitoring of a system allows the developer and the user to gain insight into the system performance. Via monitoring it is possible to keep track of the behavior of that parts of the system that determine its overall execution. Parallel/distributed systems belong to the applications which are most difficult to monitor. Due to parallel execution of the computations, the overall behavior is inherently difficult to be tracked. This problem is amplified in systems that are not designed following a modular paradigm where there is no concept of an overall scheme that users could refer to.

The method according to the invention proposes to specify several abstraction levels of system monitoring:
- Functionality level: The functionality embedded into the Computing Module can produce monitoring data, showing what a functionality is doing;
- Module level: The Modules, with their Inputs and Outputs, can be monitored in order to analyze the local data flow;
- System level: The entire system can be monitored in order to extract a high level description of the overall behavior.

These levels can easily (e.g., automatically) be implemented according to the invention.

In the following, an example of the way the invention supports the development of parallel/distributed systems from the field of robotics will be described.

In particular, one can consider an application that controls a robot by means of a number of sensors and effectors. The robot comprises:
- Sensors: visual sensors (e.g., a stereo camera set), audio sensors (e.g., microphones) and tactile sensors (e.g., force feedback skin sensors); and
- Effectors: E.g. motors that control the position of subparts and the robot as a whole.

A robot application is supposed to work as a control system that makes use of the sensors and the effectors in order to let the robot generate a well defined behavior.

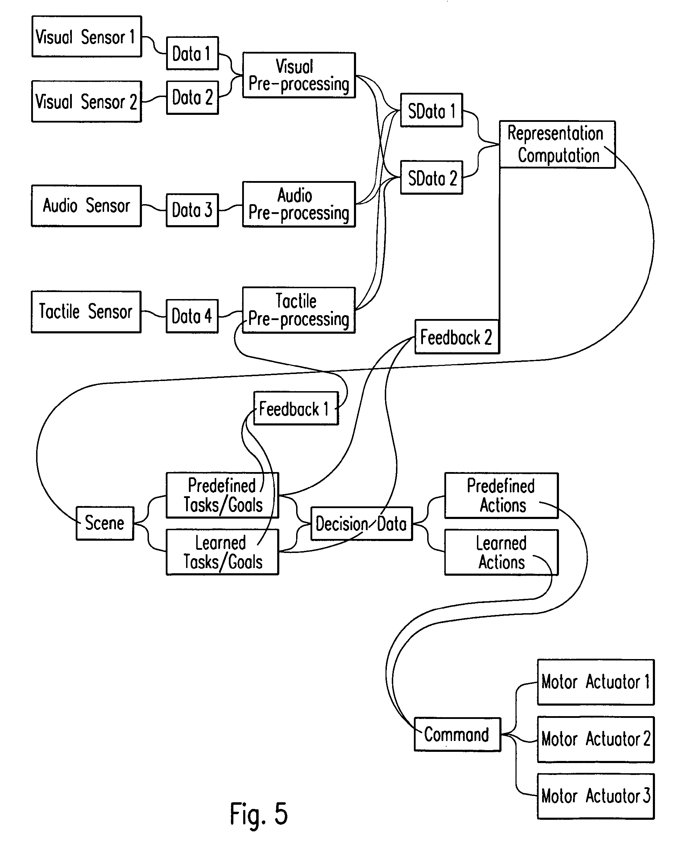

Fig. 5 illustrates the exemplary control system. Predefined modules according to an embodiment of the inventive method are used for the design. Computing modules are shown as rectangles with a single line frame, data modules as rectangles with double lines and links as arrows that interconnect the modules.

The behavior of the robot will be modeled with the following modules:
- Sensors: These modules represent the sensors present;
- Pre-processing modules: in these modules the input information for the sensors is pre-processed in order to filter the signals and map the signals into the Spatial Map and Object Map (intermediate representation).
- Representation Computation module: in this module, semantic information is derived from the information taken from the sensors; the output of this module is a scene/situation representation;
- Task/Goals modules: in these modules the possible tasks are modeled, that the robot can perform; further, the goals are modeled, that these tasks will achieve; thus an autonomous robot is created able to come to decisions independently from the environment. Feedback is used to shape representation coming from the earlier processing stages.
- Actions: these modules define how a task should be executed by the robot; these modules prepare the planning of an action and create the sequence of sub-actions that need to be executed in order to perform a task; therefore the output of these modules is a sequence of commands that should be executed by the actuator.
- Actuators: These modules represent the actuators present.

The aspects described so far constitute part of the high level design of the robot control system. Next, the interfaces of each module (Computing, Data), the type of each link and execution patterns for the system have to be defined.

As an example, consider the "Visual Processing" module. From Fig. 5 it is clear that this module requires two inputs and two outputs. The resulting interface for this module is shown in Fig. 6. The figures may illustrate views generated on a display of a computer system by a development tool implementing the invention. After defining the interface of each module, the links and execution patterns have to be specified. The definition of the links concerns the type of communication between modules. In general, a standard memory communication link type is to be established for the communication between modules that are executed on the same machine. A dedicated network link type is to be established for connections across machines.

A further design decision concerns the execution pattern, which is determined by the designer via the choice of the type of executors and the association of the modules. Thus the designer, supported by the development tool according to the embodiment of the invention described here, creates in a simple, fast and efficient way the required threads and determines the synchronization during execution.

An exemplary execution pattern for the robot control system of Fig. 5 is depicted in Fig. 7. Feedback connections are not shown for reasons of clarity. In this graph modules have been grouped using Parallel and Sequential executors. The Parallel executor creates one thread for each module contained in the executor. The Sequential executor creates one thread in which all modules are executed in a sequential fashion.

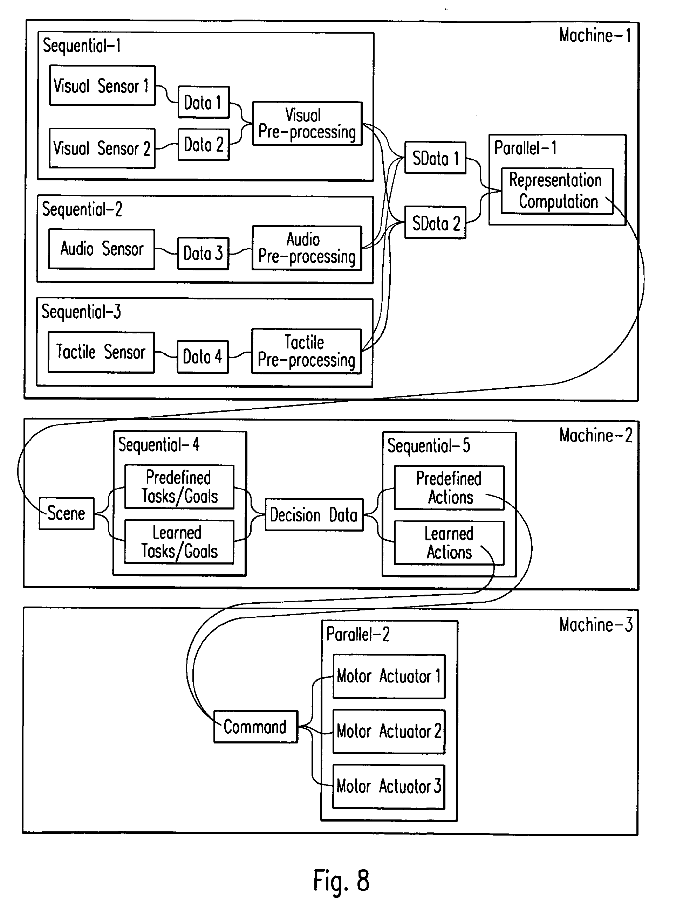

A further design decision concerns the subdivision of the system for execution on several machines. For the example system described here, a good choice is to assign one machine to each executor. This is illustrated in Fig. 8. Feedback connections have again been omitted for clarity.

The assignment of modules to Executors and Machines shown in Fig. 8 is only one possible choice (other useful combinations are possible). The inventive method allows for a flexible re-assignment of Executors and Machines for achieving any required synchronization pattern or incorporating load balancing aspects.

It is to be understood by the skilled person, that module's granularity is of course a design meter for the user application. But this factor should also be taken in account during implementation of the development tool or environment that implements the method according to the invention. This is because a user application may own any combination of the following aspects:
- Small data size for Data Modules;
- Big data size for Data Modules;
- Light computation for Computing Modules;
- Heavy computation for Computing Modules.

### Advantages of the invention

The inventive method allows to simplify the design phase, the development and the test phase of parallel/distributed systems. With a single development tool according to the invention, the following advantages are achieved:
- the design of a parallel/distributed system is combined with the actual implementation, thereby enforcing modularity;
- the implementation of common functionality required for parallel/distributed systems is automated;
- testing and monitoring of the system is simplified.

The method according to the invention supports the design and creation of parallel/distributed applications. The creation of such applications requires handling of problems like design coherency, synchronization, data communication, computation consistency and many more. Such problems are usually appearing in applications comprising parallel/distributed systems, robot applications and real-time systems.

With respect to parallel/distributed systems, the proposed method offers the following advantages: the flexibility of modular design (with the concepts of Data Module, Computing Module and Link Module); the automatic handling of data communication and synchronization between modules and many features for handling parallelism within one machine or between machines (with the concept of Executor and Process Instance).

With respect to robot applications, the proposed method offers the following advantages: the possibility to build systems with modules that may have a user defined granularity; the automatic handling of data communication between modules that simplify the integration of large robot systems in one single environment; the possibilities to configure and modify the architecture of the robot system by a simple script definition file; a high performance data communication (with the concept of Data Buffering).

With respect to real-time systems, the proposed method offers the following advantages: the flexibility of modular design (with the concepts of Data Module, Computing Module and Link Module); the possibility to hold computation determinism by a predefined pattern for handling communication between modules and computation within each module.

The invention allows to modularize the structure of a parallel/distributed system to be developed, where data, functions and link are clearly separated, via the definition of Computing Modules, Data Modules and Link Modules.

The invention proposes a data-driven system in a parallel environment developed via the definition of a connectivity graph that represents the data pathways triggering the execution events.

The invention allows to handle data communication between modules completely automatically with respect to synchronization and non-blocking communication. By synchronization, an automatic handling of the sharing of data between different threads/processes is achieved. Via non-blocking communication the method according to the invention allows each Computing Module of the system to generate new outputs and immediately continue the computation, regardless of the status of the reader modules for these outputs. These two features in combination prevent the occurrence of system deadlocks at the communication level, removing the communication dependency of parallel/distributed systems as known in the prior art.

The invention allows to simplify the handling and the definition of communication channels through the concept of Link Modules.

The invention allows the user to assign in a simple and transparent way threads and processes to Computing Modules. This feature implies a drastic reduction of the workload for system designers/developers, eliminating a strong dependency between computation and parallelization.

The invention provides for an advantageous combination of the expressivity power of script languages and re-configurability with the usage of a simple script language for the definition of the graph connectivity of the user application. With the usage of this simple script language and the employment of modularization, the method according to the invention attaches importance to the design phase of a system, removing or minimizing the gap between design and development.

### List of reference numerals

- 10: Computing Module
- 12: I/f of the Computing Module: Inputs
- 14: I/f of the Computing Module: Outputs
- 16: I/f of the Computing Module: Input Events
- 18: I/f of the Computing Module: Output Events
- 20: I/f of the Computing Module: Initialization parameters
- 22: Data Module
- 24: Input Gate of the Data Module
- 26: Output Fields of the Data Module
- 28: Initialization parameters for the Data Module
- 30: Buffer List
- CM1-CM5: Computing Modules
- DM1: Data Module
- LM1,LM2: Link Modules

## Claims

1. A method for developing a parallel/distributed application, where the development process comprises a design phase, an implementation phase and a test phase, the method comprising the following steps:
- providing, in the design phase, a script language for representing elements of a connectivity graph and the connectivity between them,
- providing, in the implementation phase, predefined modules (10, 22) for implementing functionality of the application,
- providing, in the implementation phase, predefined executors for defining a type of execution for the modules,
- providing, in the implementation phase, predefined process-instances (Machine-1 ― Machine-3) for distributing the application over several computing devices, and
- providing, in the test phase, predefined abstraction levels for monitoring and testing the application in the test phase.

2. The method according to claim 1,
further comprising the step of processing, in the implementation phase, the connectivity graph as represented based on the script language to define and configure particular modules (CM1-CM5, DM1, LM1, LM2) based on the predefined modules (10, 22) and to define the connectivity of the particular modules.

3. The method according to claim 1 or 2, wherein
the predefined modules comprise computing modules (10) for implementing functional blocks as part of the computation of the parallel/distributed application.

4. The method according to claim 3,
wherein the computing modules (10) each have an interface comprising input data (12), output data (14), input events (16), output events (18) and initialization parameters (20).

5. The method according to claim 3 or 4, wherein
passive computing modules are provided, which perform computations only in case new input data is available.

6. The method according to any one of claims 3 to 5,
wherein the predefined modules comprise data modules (22) representing data which is used by the computing modules (10) and/or is exchanged between the computing modules.

7. The method according to claim 6,
wherein the data modules (22) represent shared data.

8. The method according to claim 6 or 7,
wherein each data module (22) contains data of a specific data type.

9. The method according to any one of claims 6 to 8,
wherein the data modules (22) each have an interface comprising an input gate (24), output fields (26) and initialization parameters (28).

10. The method according to any one of claims 6 to 9, wherein data requiring synchronization is identified and an appropriate synchronization mechanism is applied for each data module.

11. The method according to claim 10,
wherein each data module instantiates a list of buffers (30) providing write or read memory for the connected computing module/s (CM1 - CM5).

12. The method according to any one of the preceding claims, wherein the predefined modules comprise link modules (LM1, LM2) representing the connectivity pattern connecting computing and / or data modules (10, 22).

13. The method according to claim 12,
wherein each link module implements a specific communication protocol.

14. The method according to claim 12 or 13,
wherein each link module relates to one link type out of the group of link types comprising local memory pointer link, for linking modules belonging to a common process, and network link, for linking modules via a network.

15. The method according to any one of claims 3 to 14,
wherein each computing module is assigned to one executor (Parallel-1).

16. The method according to any one of the preceding claims, wherein each executor (Parallel-2) groups a set of computing modules in one or more threads (Motor Actuator 1 - Motor Actuator 3).

17. The method according to any one of the preceding claims, wherein each executor represents a pattern of execution for the assigned modules.

18. The method according to claim 17,
wherein each executor relates to one type of execution pattern out of the group of patterns comprising parallel execution (Parallel-1, Parallel-2), where each module has its own thread, sequential execution (Sequential-1 ― Sequential-5), where all modules are executed sequentially in the same thread, and one step execution, where only one step of execution of all modules is performed.

19. The method according to claim 18,
wherein the group of execution patterns further comprises chain execution, where all computing modules of a thread are executed sequentially depending on the availability of data for the first module in the chain, and step-by-step execution, where one computing module at a time is executed.

20. The method according to any one of the preceding claims, wherein each process-instance (Machine-1 ― Machine-3) comprises an assignment of modules to a process.

21. The method according to any one of the preceding claims, wherein each computing module is assigned to one process-instance.

22. The method according to any one of the preceding claims, comprising the step of grouping, in the implementation phase, a set of executors (Sequential-1 - Sequential-3) into a single process as one process-instance (Machine-1).

23. The method according to any one of the preceding claims, wherein each of the predefined modules (10, 22) comprises a monitoring code for monitoring the functionality implemented by the module.

24. The method according to any one of the preceding claims, wherein the predefined abstraction levels comprise a functionality level, where at least one module generates monitoring data related to a functionality of the module.

25. The method according to any one of the preceding claims, wherein the predefined abstraction levels comprise a module level, where the input and output of at least one module is monitored in order to analyze the data flow related to that module.

26. The method according to any one of the preceding claims, wherein the predefined abstraction levels comprise a system level for monitoring the entire application.

27. The method according to any one of the preceding claims, wherein the script language is used during execution to execute the application.

28. A method for supporting the development of a parallel/distributed application,
where the development process comprises a design phase, an implementation phase and a test phase, the method comprising the following steps:
- providing, in the design phase, a script language for representing elements of a connectivity graph and the connectivity between them,
- providing, in the implementation phase, computing modules (10), data modules (22) and link modules for implementing the functionality of the application, where the modules and their connectivity are automatically generated from the connectivity graph as represented based on the script language, and
- providing, in the test phase, predefined abstraction levels for monitoring and testing the application in the test phase.

29. A computer software program product,
implementing a method according to any of the preceding claims when run on a computing device.

30. A storage device onto which a computer software program product according to claim 29.

31. A robot, having a control system developed using a method according to any of claims 1 to 28.
